# EUROPEAN PATENT APPLICATION

(11) **EP 2 237 568 A1**
(43) Date of publication of application: **06.10.2010**
(21) Application number: 09250964.5
(22) Date of filing: 31.03.2009
(51) Int. Cl.: H04Q 9/00

(54) **Monitoring device for monitoring physical variables**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

A monitoring device for monitoring a characteristic, comprising a mechanical sensor having a sensing element operable to react mechanically to variations in said characteristic in such a way as to cause variations in an electrical property of the mechanical sensor; and resetting means operable to set or reset said sensing element to a predetermined initial mechanical state; said sensing element being operable to move from said predetermined initial mechanical state to an extreme mechanical state, said extreme mechanical state being dependent on an extreme condition of said characteristic during a period since a previous reset operation, and to remain in said extreme mechanical state until a subsequent reset operation; a converter for obtaining a measurement of the electrical property of the mechanical sensor during a read operation and converting said measurement into a digital representation of said measurement; and a signal transmitter responsive to said converter and operable to transmit a radio-frequency signal indicative of said measurement.

## Description

### Technical Field

The present invention relates to monitoring devices for monitoring characteristics, and in particular, for monitoring physical characteristics which may be mechanical characteristics such as displacement, velocity, acceleration, orientation, vibration or shock, or for monitoring non-mechanical characteristics such as temperature, pressure, humidity, radiation level, electrostatic field strength or concentration levels of substances of interest. More specifically, aspects of the present invention relate to monitoring devices suitable for incorporation into RFID tags.

### Background to the Invention and Prior Art

### RFID Tag Technology

Radio Frequency Identification (RFID) is an identification technology which relies on storing and retrieving data using devices called RFID tags. An RFID tag is in general a small object capable of functioning as a label, that can be attached to or incorporated into an item such as a commercial product, an animal, or a person.

Typically, an RFID tag consists of a small integrated circuit with a small storage capability and a radio antenna. Some tags, referred to as "active tags", have an internal power source which is generally used to power any processing circuitry and to generate outgoing signals. Other tags, referred to as "passive tags" do not have any internal power source. Passive tags generally obtain the energy required for responding to incoming signals and generating outgoing signals by collecting power from an electromagnetic field generated by a reader. Also, there exist tags known as "semi-active" (or sometimes "semi-passive") tags, which generally have a small power source in order to enable the tag's processing circuitry to be powered constantly. These tags therefore do not need to collect power from incoming signals before commencing any processing, allowing them generally to provide faster responses than passive tags, but active and semi-active lags are generally more expensive than passive tags.

An RFID tag generally holds identity information at least relating to an item with which it is associated. Current RFID tags typically offer a 96-bit identifier number that can be globally unique and addressable. Upon being queried by a reader, a tag generally responds with identity information which may point to a unique location in a database in which detailed information about the item may be stored. This may include product characteristics, data about the origin of the items the identity of a manufacturer and other manufacturing details, pricing information, any appropriate expiry dates, etc.

RFID technology is thought to be a possible at least partial replacement for barcode technology, for which there exists a standard called the Universal Product Code (UPC). An RFID tag can provide an identification number, as can a barcode, but unlike barcodes, RFID tags can be read at a distance without a line-of-sight requirement, and without human intervention. Due to this and due to their small size, RFID tags can be placed in boxes with, or even inside consumer items, can be attached to clothes, and can be used in a wide variety of other applications.

RFID tag technologies have been in use for many years but major technology development has happened in the last few years in particular through the Auto-ID Center in collaboration with the MIT. An aim was to make RFID tag as simple as possible, with very small chips and a cost per tag of less than 0.1 US$. At this level, it is thought that RFID tags will realistically start to replace the barcodes presently used in relation to many consumer products, and economies of scale will then enable research into new applications. It is likely that the first tags of a sufficiently small size and having a low-enough cost for the above will be passive tags.

### MEMS technology

Micro-Electromechanical Systems (MEMS) technology is a micro-fabrication technology that covers the integration of miniature mechanical elements, sensors and any necessary electronics on a common silicon substrate. The mechanical components are typically produced by a micromachining process and the components can be combined with the electronics on the same device.

As the production processes are similar to those used for the production of integrated circuits a high level of functionality can be reliably fabricated onto a silicon chip using mass production techniques and at relatively low cost.

### RFID technology and sensing

RFID tags can be combined with sensors to sense temperature, vibration, shock and other physical parameters. Such tags generally require a power source for their operation.

The CAEN RFID EASY2LOG (registered trademark) Temperature Logger (Model A927Z) is an example of a low cost, semi-passive UHF tag that allows monitoring of temperature sensitive products such as fresh food (fruit, vegetables), seafood, meat and poultry, milk-based products, frozen food and chemical/pharmaceutical products during transportation or storage. The tags each have a unique ID, a finite memory capacity and only a battery life of between three and five years. Further information dated 30th September 2008 was found on the internet at http://www.caentechnologies.com/rfid/news.php?id=155 .

### Prior Art

US7239064 ("Jenkins") relates to a resettable latching MEMS temperature sensor which refers to a capability of recording external temperature extremes without consuming electrical power by virtue of a thermal bimorph, contacts, latches, and actuators for device reset. It is said that the device can be designed, hardwired, or programmed to trigger at various temperature levels through being configured to perform one of a variety of actions at the time of a temperature extreme being reached, or at some time after a temperature limit has occurred. It will be understood that the temperature sensor disclosed may in fact record whether a particular predetermined threshold temperatures has been reached, or which (if any) of a series of predetermined threshold temperatures has been reached. It is stated that the sensor may be connected to an RFID tag or other transmitter for remote determination of temperature environments.

US2007024410 ("Yazdi") relates to sensing systems and methods capable of providing a cumulative measurement capability, possibly in the form of an RFID tag capable of measuring cumulative heat and humidity for continuous monitoring of storage and shipping conditions of various goods. Systems having integrated circuitry and a plurality of sensing elements, preferably having cantilevered bimorph beams, are disclosed. Each sensing element is responsive to an environmental condition so as to deflect toward and away from open contacts in response to changes in the environmental condition. Each sensing element produces a digital output, which requires electrical power to be available for a reading to be taken. The integrated circuitry interfaces with the sensing elements so that the digital outputs of the sensing elements are processed to generate a system output of the sensing system.

### Summary of the Invention

According to a first aspect of the present invention, there is provided a monitoring device for monitoring a characteristic, said device comprising:
a mechanical sensor having a sensing element operable to react mechanically to variations in said characteristic in such a way as to cause variations in an electrical property of the mechanical sensor; and resetting means operable to set or reset said sensing element to a predetermined initial mechanical state; said sensing element being operable to move from said predetermined initial mechanical state to an extreme mechanical state, said extreme mechanical state being dependent on an extreme condition of said characteristic during a period since a previous operation of said resetting means, and to remain in said extreme mechanical state until a subsequent operation of said resetting means;
a converter for obtaining a measurement of the electrical property of the mechanical sensor during a read operation and converting said measurement into a digital representation of said measurement; and
a signal transmitter responsive to said converter and operable to transmit a radio-frequency signal indicative of said measurement.

Preferred embodiments enable an indication of an extreme condition (i.e. a maximum or minimum level reached) of a physical parameter to be obtained and then maintained without a source of power being required. Having been obtained (without a source of power being required) and then maintained, possibly indefinitely (still without a source of power being required) until such time as it is desired to receive a signal indicative of the extreme condition reached since the most recent reset operation, preferred embodiments may then exploit a power source available during a read operation in order to then be able to provide to a reader a radio-frequency signal indicative of the electrical property of the mechanical sensor, and hence indicative of the extreme condition of the characteristic in question that has been reached since the most recent reset operation. This overcomes the limitation of known active sensors whereby an ongoing or at least intermittent power source is required for their operation, either to obtain readings, or to store readings, or both.

The sensing element is preferably operable to remain in the extreme mechanical state until a subsequent operation of the resetting means even in the absence of electrical energy from an electrical energy supply.

Preferably the sensing element is operable to react to variations in the characteristic in question in such a way that there is a monotonic relationship between a current electrical property of the mechanical sensor and an extreme condition of the characteristic reached since a previous operation of said resetting means.

Preferably the resetting means is operable to prevent the sensing element being set to a predetermined initial mechanical state in the absence of a predetermined reset signal. Monitoring devices according to preferred embodiments may be made as small, low cost devices, which may be suitable for integration with standard RFID components. Where these components provide secure functionality, such devices when used in conjunction with such RFID components may take advantage of such secure functionality in order to provide a secure reset functionality, for example.

According to preferred embodiments, the converter is operable to convert an analogue representation of the measurement of the electrical property of the mechanical sensor into a digital representation of said measurement. Where the monitoring device is incorporated into an RFID tag having a microcontroller having analogue-to-digital conversion functionality, the device may be arranged to make use of this.

According to preferred embodiments, the monitoring device comprises a signal receiver for receiving a radio-frequency read signal, the converter being operable to obtain a measurement of the electrical property of the mechanical sensor in response to receipt of a radio-frequency read signal. Where the monitoring device is incorporated into an RFID tag having a signal receiver for receiving a radio-frequency read signal, the device may be arranged to make use of this.

According to preferred embodiments, the monitoring device may further comprise an energy store operable to store energy received with a radio-frequency read signal. This may be arranged to make stored energy available for the converter to obtain measurements of the electrical property of the mechanical sensor, and/or for the signal transmitter to transmit radio-frequency signals indicative of such measurements.

According to preferred embodiments, the mechanical sensor may have a sensing element operable to react mechanically to variations in a mechanical characteristic such as displacement, velocity, acceleration, orientation, vibration or shock. Alternatively or additionally, the mechanical sensor may have a sensing element operable to react mechanically to variations in a non-mechanical characteristic such as temperature, pressure, humidity, radiation level, electrostatic field strength or concentration levels of a substance of interest.

Monitoring devices according to preferred embodiments may be made as small, low cost devices, whose manufacture may be suited to known MEMS fabrication techniques. Using such techniques, very small and cost-effective monitoring devices may be batch-manufactured and may be packaged with passive RFID tag components, for example, to produce RFID tags that can relay measured values.

Sensors are generally powered by a continuous or at least intermittent power source, a rechargeable or replaceable power source or use power scavenging or harvesting techniques. In preferred embodiments, however, no additional power source is required to be present or activated for sensing or storing an indication of the physical parameter in question.

According to preferred embodiments, the sensing element may operate a sliding component in a mount that offers sufficient friction to hold the sliding component in place when the sensing element is no longer in contact. The sensing element is displaced by an amount that is proportionate to the physical property being sensed.

According to such embodiments, the sliding element may be resistive and the mount that holds it in place may form a contact with the sliding element. A second contact may be fixed to the sliding element. When the sliding element is activated it may be moved through the mount and the distance between the fixed contact on the mount and the sliding element.

According to some embodiments, temperature may be sensed by the action of a bi-metallic strip fixed at one end and allowed to flex more or less with an increase or decrease in temperature.

According to other embodiments, acceleration, shock or peak vibration may be stored. Movement of a sliding element may be caused by a small mass that is able to travel in a constrained manner, for example.

According to other embodiments, tilt or maximum angle rotation can be stored. Movement of a sliding element may be caused by a vertical projection that remains vertical relative to the sliding element that is allowed to rotate on a plane around an axis, for example.

As an alternative to embodiments based on sliding elements, ratchet-based embodiments, screw-based embodiments, or other modifications are possible.

According to a second aspect of the present invention, there is provided an RFID tag having a monitoring device according to any of the preceding claims incorporated therein.

According to preferred embodiments of the second aspect, the RFID tag may be a passive RFID tag. Alternatively, the RFID tag may be an active or semi-active RFID tag.

The various options and preferred embodiments referred to above in relation to the first aspect are also applicable in relation to the second aspect.

### Brief Description of the Drawings

Preferred embodiments of the present invention will now be described with reference to the appended drawings, in which:
Figure 1 represents the functionality of a maximum and minimum temperature sensor at a mid-point setting and represents the action of the reset functionality;
Figure 2 represents the response of the sensor of Figure 1 to a change in temperature;
Figure 3 shows an arrangement of a sensor for detecting tilt;
Figure 4 shows the response of the sensor of Figure 3 to a change in orientation;
Figure 5 shows an arrangement of the sensor for detecting shock or vibration;
Figure 6 shows the response of the sensor of Figure 5 to shock or vibration;
Figure 7 shows an arrangement of the sensor of Figure having detected shock or vibration
and not having been reset; and
Figure 8 shows an arrangement of the sensor used in association with an RFID tag capable of being read when near an RFID reader.

### Description of Preferred Embodiments of the Invention

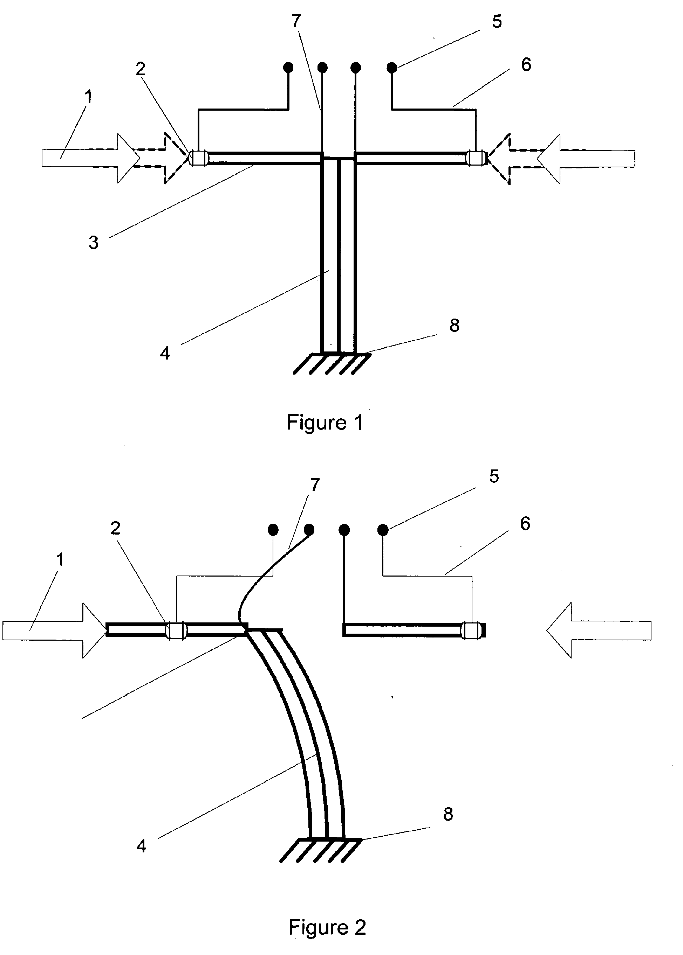

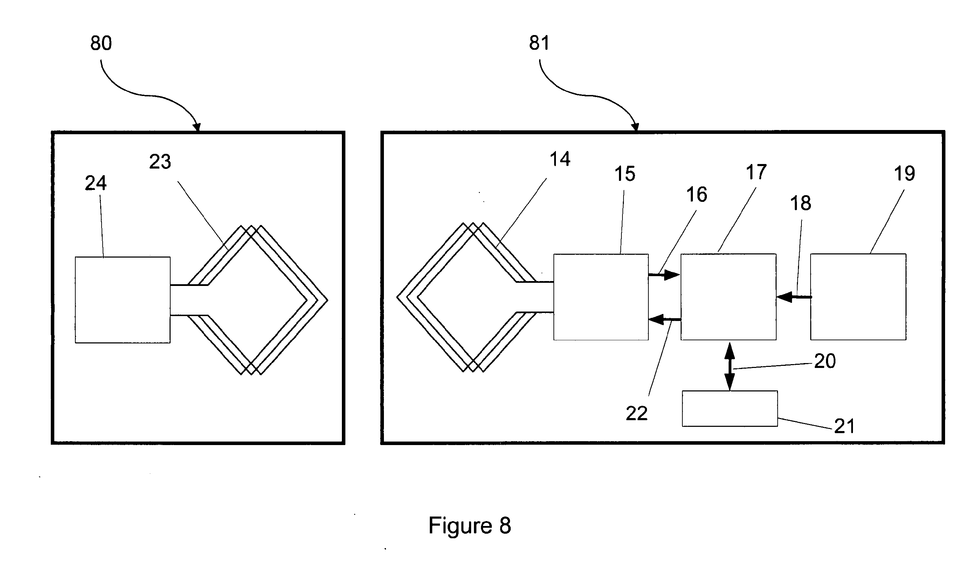

With reference to Figures 1-8, various monitoring devices according to preferred embodiments will be described. A description of a complete monitoring device according to a preferred embodiment - and of how an RFID tag having such a monitoring device incorporated therein may operate and interact with an RFID reader - will be provided later with reference to Figure 8. Firstly, however, some different types of batteryless sensing elements for sensing different types of characteristics, each of which may form part of a monitoring device according to a preferred embodiment, well be described with reference to Figures 1 to 7.

### Sensing temperature

**Figure 1** represents the functionality of a maximum and minimum temperature sensor at a mid-point setting and represents the action of the reset functionality. It consists of two sliding elements 3 that are resistive while the associated conductive mount 2 that holds it in place forms a first contact with sliding element. A second contact 7 is fixed to the sliding element(s). When the sliding element is activated it is moved through the mount and the distance between the fixed contact on the mount and the sliding element.

Activation of the sensor to an increase or decrease of temperature is obtained as a result of bending of a bimetallic strip 4 relative to a fixed point 8.

**Figure 2** represents activation of the sensor to change of temperature obtained as a result of bending of a bimetallic strip 4 relative to a fixed point 8. The sliding element 3 is now displaced by an amount that is a function of the movement of the bi-metallic strip 4. The resistance between the point where the fixed connection 7 is made and the conductive mount 2 will have been changed by a corresponding amount.

A further element 1 is provided to reset the sliding element 3 to a normal position. As will be discussed in more detail later, this reset operation may be operated under secure control, using the facility provided with some RFID tags to respond and/or perform other operations only when triggered using a correct "read" signal, for example, in order to prevent the sliding element from being reset by an unauthorised party, or by mistake.

### Sensing tilt/rotation

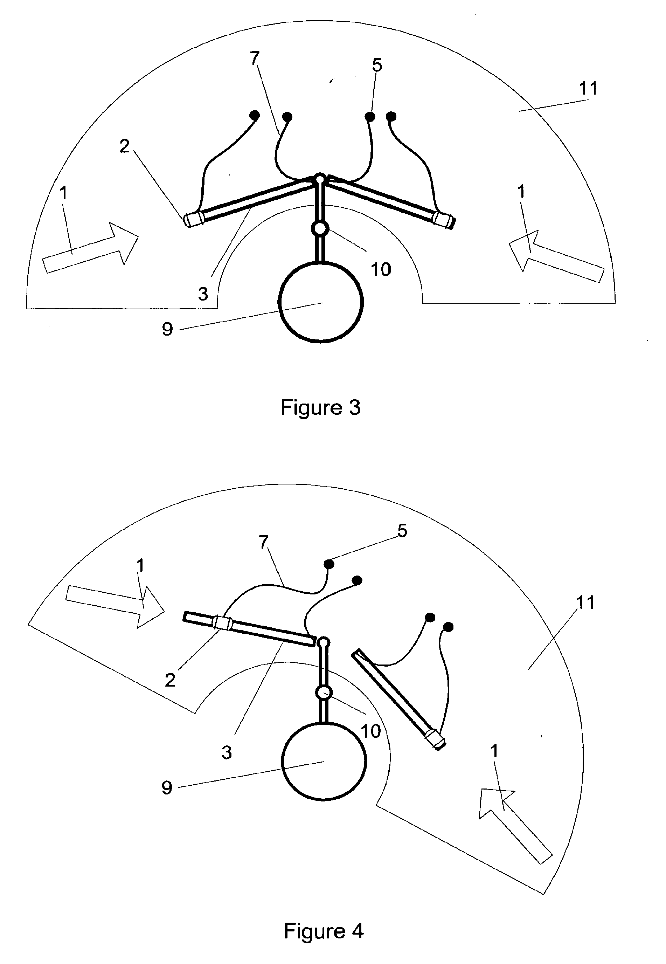

**Figure 3** represents an arrangement of the sliding elements 3 such that rotational displacement can be detected relative to a mass 9 that maintains a vertical position under gravity and is allowed to pivot around a point 10. A plane of reference 11 is provided which is allowed to rotate relative to the mass 9 and the sliding element 3 is now displaced by an amount that is a function of the rotation.

**Figure 4** represents the plane of reference 11 rotated relative to the mass 9. The sliding element 3 is now displaced by an amount that is a function of the angle of rotation of the plane of reference 11. When the plane of reference 11 is returned to its normal position

Note: a skilled person would be able to produce a variant of this sensor to cater for any range of angles of interest. For instance a duplication of the sliding elements at a different plane of reference (says 90 deg) in order to capture a different tilt angle range (says 360 deg).

### Sensing shock/vibration

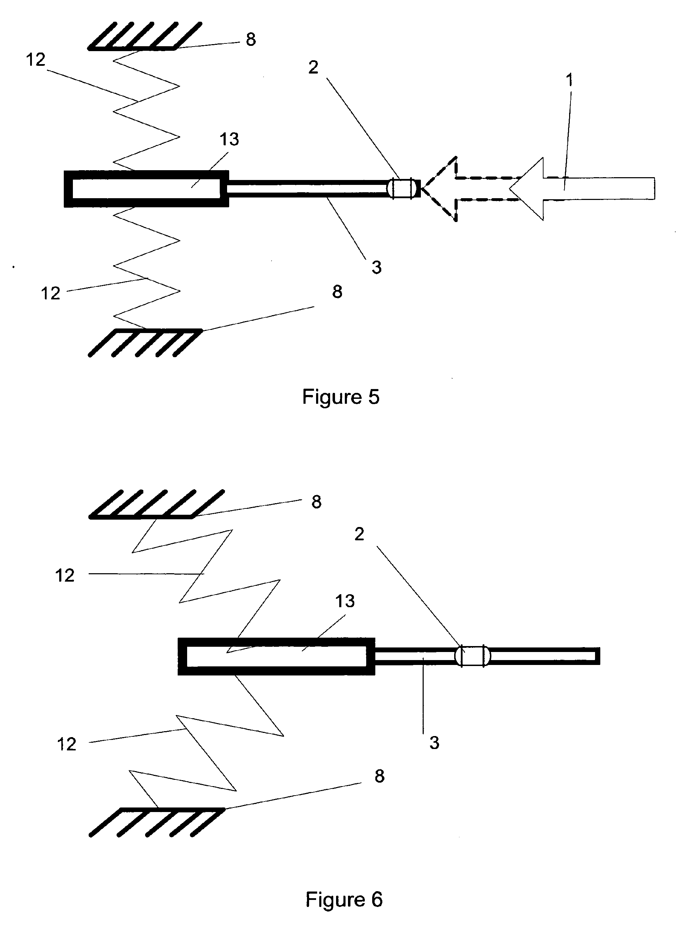

**Figure 5** represents an arrangement of a mass 13 held in place by an elastic material 12 such that a peak vibration or shock can be detected and displace a sliding rod 3. The elastic material

**Figure 6** represents the change in position of the mass 13 which has displaced the sliding rod 3 by a corresponding amount.

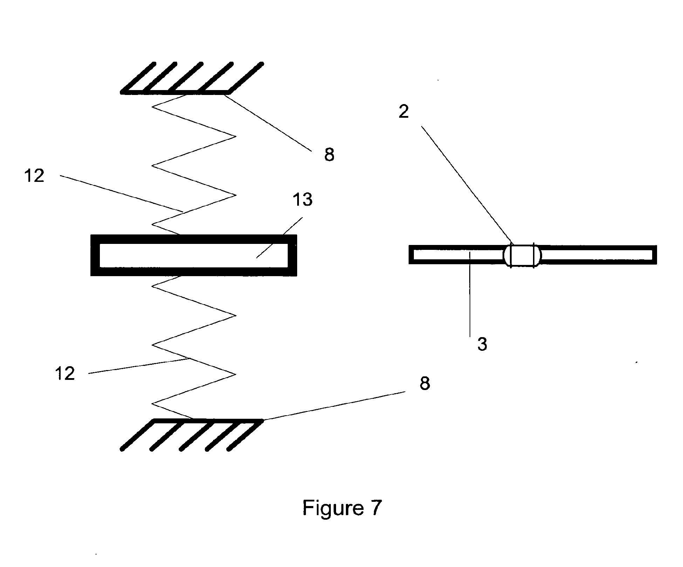

**Figure 7** represents the mass at its normal position determined by the elastic material and the sliding rod at its displaced position.

### Sensing element used with an RFID tag

**Figure 8** represents an RFID reader 80 and an RFID tag 81. It will be understood that the relative sizes of boxes 80 and 81 are not intended to be indicative of the actual sizes of RFID readers and RFID tags - generally, RFID tags are significantly smaller than RFID readers.

Referring first to the RFID reader 80, this contains electronic and possibly other components whose functionality will not be described in detail, as these may operate in the same manner as those of a standard RFID reader, but which are indicated by box 24. This would in general be connected to a power supply (not shown) or may have an on board power supply such as a battery (not shown). The functionality of the components of box 24 may include generating a trigger signal suitable for triggering a response from an RFID tag and/or interpreting and/or processing a response signal received from an RFID tag. RFID reader 80 also has an aerial 23 for transmitting the trigger signal as a radio-frequency (RF) signal to an RFID tag and for receiving the response signal in the form of an RF signal from an RFID tag, and providing this to the relevant processing components of box 24.

RFID tag 81 comprises a batteryless sensing element 19, which may be a batteryless temperature sensor such as that described with reference to Figures 1 and 2, a batteryless tilt/rotation sensor such as that described with reference to Figures 3 and 4, a batteryless shock/vibration sensor such as that described with reference to Figures 5, 6 and 7, or an another type of batteryless sensor. The batteryless sensing element 19 is connected via an electrical connection 18 to a low-power microcontroller 17, which has an analogue-to-digital converter (ADC). The low-power microcontroller 17 may have connections 20 with an associated memory 21 and can communicate with RFID tag front-end circuitry 15 via electrical connectors 16. The RFID tag front-end circuitry 15 converts the data from the microcontroller into an RF form for transmission by the tag aerial 14.

When the RFID tag 81 is read by the RFID reader 80, the tag aerial 14 receives an RFID read signal from the reader aerial 23, and is also able to receive enough energy from the RF signal received from the tag reader 24 to enable it to have enough power to perform its role in providing an RFID response signal to the RFID reader 80. The energy transmitted by the tag reader 80 via the associated tag reader aerial 24 is used to power the RFID tag and allow the microcontroller 17 to read the value(s) from the sensor(s) 19, store them in memory 21 if necessary, and transmit them via tag front-end circuitry 15 and tag aerial 14 back to the reader 80.

### Reset

Figures 1, 3 and 5 include a reset component capable of returning the sliding element to its Normal position.

It is envisaged that the reset component would be an actuator or a solenoid that is operated under the control of the RFID tag microcontroller which is powered from a tag reader. This reset could also be carried out securely with secure tag readers and associated security protocols to avoid unauthorised or accidental resetting of the sensor.

## Claims

1. A monitoring device for monitoring a characteristic, said device comprising:
a mechanical sensor having a sensing element operable to react mechanically to variations in said characteristic in such a way as to cause variations in an electrical property of the mechanical sensor; and resetting means operable to set or reset said sensing element to a predetermined initial mechanical state; said sensing element being operable to move from said predetermined initial mechanical state to an extreme mechanical state, said extreme mechanical state being dependent on an extreme condition of said characteristic during a period since a previous operation of said resetting means, and to remain in said extreme mechanical state until a subsequent operation of said resetting means;
a converter for obtaining a measurement of the electrical property of the mechanical sensor during a read operation and converting said measurement into a digital representation of said measurement; and
a signal transmitter responsive to said converter and operable to transmit a radio-frequency signal indicative of said measurement.

2. A monitoring device according to claim 1 wherein said sensing element is operable to remain in said extreme mechanical state until a subsequent operation of said resetting means in the absence of electrical energy from an electrical energy supply.

3. A monitoring device according to claim 1 or 2 wherein said sensing element is operable to react to variations in said characteristic in such a way that there is a monotonic relationship between a current electrical property of the mechanical sensor and an extreme condition of said characteristic reached since a previous operation of said resetting means.

4. A monitoring device according to claim 1, 2 or 3 wherein said resetting means is operable to prevent said sensing element being set or reset to a predetermined initial mechanical state in the absence of a predetermined reset signal.

5. A monitoring device according to any of the preceding claims wherein said converter is operable to convert an analogue representation of the measurement of the electrical property of the mechanical sensor into a digital representation of said measurement.

6. A monitoring device according to any of the preceding claims wherein said monitoring device comprises a signal receiver for receiving a radio-frequency read signal, said converter being operable to obtain a measurement of the electrical property of the mechanical sensor in response to receipt of a radio-frequency read signal.

7. A monitoring device according to any of the preceding claims wherein said monitoring device further comprises an energy store operable to store energy received with a radio-frequency read signal.

8. A monitoring device according to claim 7 wherein said energy store is operable to make stored energy available for the converter to obtain measurements of the electrical property of the mechanical sensor.

9. A monitoring device according to claim 7 or 8 wherein said energy store is operable to make stored energy available for the signal transmitter to transmit radio-frequency signals indicative of measurements obtained of the electrical property of the mechanical sensor.

10. A monitoring device according to any of the preceding claims wherein said mechanical sensor has a sensing element operable to react mechanically to variations in a mechanical characteristic such as displacement, velocity, acceleration, orientation, vibration or shock.

11. A monitoring device according to any of the preceding claims wherein said mechanical sensor has a sensing element operable to react mechanically to variations in a non- mechanical characteristic such as temperature, pressure, humidity, radiation level, electrostatic field strength or concentration levels of a substance of interest.

12. An RFID tag having a monitoring device according to any of the preceding claims incorporated therein.

13. An RFID tag according to claim 12 wherein said RFID tag is a passive RFID tag.
